# EUROPÄISCHE PATENTANMELDUNG

(11) **EP 1 348 682 A1**
(43) Veröffentlichungstag der Anmeldung: **01.10.2003**
(21) Anmeldenummer: 03405158.1
(22) Anmeldetag: 06.03.2003
(51) Int. Cl.: C05F 17/02, C05F 9/04

(54) **Vorrichtung zum Kompostieren von Haus- und Gartenabfällen**

(30) Priorität: 26.03.2002 CH 5262002
(71) Anmelder: Aeroflex AG, 5507 Mellingen (CH)
(72) Erfinder: Merath, Wolfgang, 5462 Siglistorf (CH)
(74) Vertreter: Rottmann, Maximilian R.

(57) **Zusammenfassung**

Eine Vorrichtung zum Kompostieren von Haus- und Gartenabfällen weist eine um ihre Längsmittelachse (32) drehbare Trommel (1) auf. Die Trommel ist mit Mischelementen (28) zum Durchmischen des Inhalts versehen. Die Trommel (1) ist aus Kunststoff gefertigt und die Mischelemente (28) sind gleichzeitig als Verstärkungsrippen ausgebildet. Die Trommel (1) ist auf einem Untergestell (2) drehbar abgestützt. Zum Einfüllen der zu kompostierenden Materialien weist die Trommel (1) eine Öffnung (3) auf, welche mittels eines Verschlussorgans (5) verschliessbar ist. Im weiteren ist ein Siebelement (7) vorgesehen. Sowohl das Verschlussorgan (5) wie auch das Siebelement (7) werden seitlich derart in einer Führungsschiene (4a, 4b) geführt, dass sie wechselweise zwischen einer Ruhe- und einer Wirkstellung verschiebbar sind, wobei sie in der Wirkstellung die Öffnung (3) zu verschliessen bzw. abzudecken bestimmt sind.

## Beschreibung

Die Erfindung betrifft eine nach dem Oberbegriff des Anspruchs 1 ausgebildete Vorrichtung zum Kompostieren von Haus- und Gartenabfällen.

Im Haushaltbereich werden zum Kompostieren der anfallenden Haus- und Gartenabfälle bis anhin überwiegend aufrecht stehende Behälter mit rundem oder polygonalem Querschnitt eingesetzt. Das Kompostiermaterial wird diesen Behältern von oben über eine Öffnung zugeführt. Ein grundsätzlicher Nachteil derartiger Behälter besteht darin, dass der eigentliche Kompostiervorgang relativ langsam vonstatten geht, da im Behälter praktisch keine Luftzirkulation stattfinden kann und ausserdem keine physische Durchmischung der zu kompostierenden Materialen und insbesondere eines allfällig zugegebenen Kompostbeschleunigers möglich ist.

Um diese Nachteile zu beheben sind Kompostiervorrichtungen bekannt, die mit einer um ihre Längsmittelachse drehbaren Trommel versehen sind. Eine derartige Vorrichtung ist beispielsweise aus der US 5'589'391 bekannt. Die darin beschriebene Kompostiervorrichtung weist einen rechteckigen Basisbehälter auf, der mit vier vertikalen Pfeilern versehen ist. Je zwei dieser Pfeiler sind am oberen Ende mittels eines Balkens miteinander verbunden. Auf diesen Balken ist eine Trommel drehbar abgestützt. Die Trommel weist einen sechseckigen Querschnitt auf. Auf der einen Seite der Trommel ist ein Handgriff angebracht, mittels welchem die Trommel gedreht werden kann. Die Trommel selbst besteht aus einer Vielzahl von Einzelteilen. Zur Bildung der Trommel sind namentlich Holzbretter vorgesehen. Mittels zwei sechseckigen, aus Stahl bestehenden Seitenrahmen werden die Holzbretter zu der sechseckigen Trommel zusammengefügt. Die Trommel ist ausserdem mit einer Öffnung versehen, welche mittels einer Tür verschliessbar ist. Die gesamte Kompostiervorrichtung wird in Form eines Kits geliefert, welches vom Endbenutzer zusammengebaut werden kann. Es versteht sich, dass eine derartige Kompostiervorrichtung aufwendig in der Herstellung ist und deren Zusammenbauen sehr zeitintensiv ist.

Es ist daher die Aufgabe der Erfindung, eine gemäss dem Oberbegriff des Anspruchs 1 ausgebildete Vorrichtung zum Kompostieren von organischen Materialien derart weiterzuentwickeln, dass diese leicht aber trotzdem stabil ist, und dass sie im weiteren günstig und einfach herzustellen ist.

Diese Aufgabe wird durch die im Kennzeichen des Anspruchs 1 angeführten Merkmale gelöst.

Bevorzugte Ausführungsbeispiele der Erfindung sind in den abhängigen Ansprüchen 2 bis 15 umschrieben.

Indem die Mischelemente gleichzeitig als Verstärkungsrippen ausgebildet sind kann die Trommel aus einem relativ dünnwandigen Material hergestellt werden, ohne dass dabei Nachteile hinsichtlich der Stabilität in Kauf genommen werden müssen. Dies kann in besonders vorteilhafter Weise erreicht werden, wenn zusätzlich die Trommel umfassende Führungsschienen vorgesehen werden.

Anhand von Zeichnungen wird nachfolgend ein bevorzugtes Ausführungsbeispiel der Erfindung näher beschrieben. In diesen Zeichnungen zeigt:
Fig. 1 eine Kompostiervorrichtung mit einer Trommel und einem Untergestell in einer Seitenansicht,
Fig. 1a einen Querschnitt durch ein Führungselement der Trommel in vergrösserter Darstellung, und
Fig. 2 die Kompostiervorrichtung in einem Querschnitt entlang der Linie A-A in Fig. 1.

Die Vorrichtung zum Kompostieren von Haus- und Gartenabfällen besteht im wesentlichen aus einer Trommel 1 und einem Untergestell 2, das zum drehbaren Abstützen der Trommel 1 ausgebildet ist. Wenn die Trommel 1 auf dem Untergestell 2 abgestützt ist, kann sie um ihre Längsmittenachse 32 gedreht werden. Die Trommel 1 und das Untergestell 2 sind im vorliegenden Fall zugunsten einer übersichtlichen Darstellung jedoch separat dargestellt.

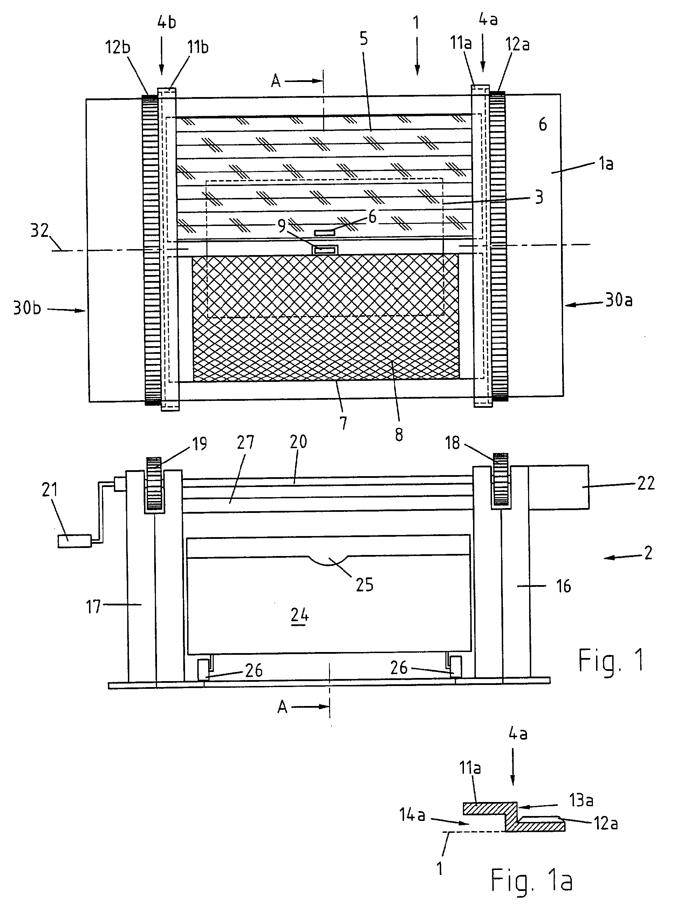

Die Trommel 1 ist im wesentlichen hohlzylindrisch ausgebildet und mit einer Öffnung 3 zum Einfüllen der zu kompostierenden Materialien versehen. Auf der Innenseite der Trommel sind Mischelemente angeordnet, welche aus der Darstellung gemäss Fig. 1 jedoch nicht ersichtlich sind. Auf beiden Seiten der Öffnung 3 ist je ein Führungsmittel in Form einer Führungsschiene 4a, 4b angeordnet, welche die Trommel 1 vollständig umfassen. Die jeweilige Führungsschiene 4a, 4b ist in Form eines Doppel-L ausgebildet, wie aus der Fig. 1a ersichtlich ist, welche die rechte Führungsschiene 4a in einem Querschnitt und in vergrösserter Darstellung zeigt. Die Führungsschienen 4a, 4b haben verschiedene Funktionen: Zum einen dienen sie als Führung für ein Verschlussorgan 5 und ein Siebelement 7. Dazu weist die jeweilige Führungsschiene 4a, 4b auf der der Öffnung 3 zugewandten Innenseite einen Schenkel 11a, 11b auf, der zwischen sich und der Trommel 1 einen Ausnehmung in Form eines Schlitzes 14 begrenzt (Fig. 1a), in welchem das Verschlussorgan 5 und das Siebelement 7 seitlich aufgenommen und geführt sind. Zum anderen ist die jeweilige Führungsschiene 4a, 4b auf der Oberseite mit einer Verzahnung 12a, 12b versehen, welche dem Antreiben der Trommel 1 dient, wie nachfolgend noch näher erläutert wird. Schliesslich dienen die Führungsschienen 4a, 4b gleichzeitig auch noch als Verstärkung für die Trommel 1, indem sie diese vollständig umfassen. Das Verschlussorgan 5 und das Siebelement 7 können zwischen einer Ruhe- und einer Wirkstellung verschoben werden. Vorzugsweise sind Anschläge und/oder Arretierungen vorgesehen, mittels welchen das Verschlussorgan 5 bzw. das Siebelement 7 sowohl in der Ruhe- wie insbesondere auch in der Wirkstellung fixierbar ist. Die Anschläge und/oder Arretierungen sind jedoch nicht eingezeichnet. Sowohl das Verschlussorgan 5 wie auch das Siebelement 7 sind mit einem Handgriff 6, 9 versehen, um das Verschlussorgan 5 bzw. das Siebelement 7 verschieben zu können. Das Verschlussorgan 5 dient, wie der Name schon sagt, dem Verschliessen der Öffnung 3 der Trommel 1, während das Siebelement 7 zum Sieben des in der Trommel 1 aufgenommenen Komposts dient, wenn es sich vor der Öffnung 3 befindet und die Trommel 1 gedreht wird. Die Trommel 1 ist vorzugsweise aus einem UV-beständigen, sommer- und winterfesten Kunststoff, beispielsweise PU, gefertigt. Für die Herstellung der Führungsschienen 4a, 4b kommen sowohl Kunststoffe wie auch Metalle in Frage. Die beiden Stirnseiten 30a, 30b der Trommel 1 sind vorzugsweise ebenfalls aus einem Kunststoff gefertigt. Als Trommelmaterial wird vorzugsweise ein UV-beständiger Kunststoff verwendet, der sommer- und winterfest ist.

Zum drehbaren Abstützen der Trommel 1 dient das mit zwei Stützfüssen 16, 17 versehene Untergestell 2. An diesem Untergestell 2 sind vier Zahnräder angeordnet, wobei aus der Darstellung gemäss Fig. 1 nur die beiden vorderen Zahnräder 18, 19 ersichtlich sind. Die beiden vorderen Zahnräder 18, 19 sind mittels einer Welle 20 gekoppelt. Zum Antreiben der beiden Zahnräder 18, 19 kommt entweder eine Kurbel 21 oder ein Elektromotor 22 zum Einsatz. Bei aufgesetzter Trommel 1 greifen die Zahnräder 18, 19 in die Verzahnung 12a, 12b der jeweiligen Führungsschiene 11a, 11b ein, so dass ein schlupffreier Antrieb der Trommel 1 ermöglicht wird. Die der Verzahnung 12a zugewandte Stirnseite 13a der Führungsschiene 4a dient auch als seitliche Führung der Trommel 1 auf dem Untergestell.

Zwischen den beiden Stützfüssen ist ein Untersatz 24 zum Aufnehmen des Kompostes vorgesehen. Der Untersatz 24 kann sowohl als Schublade ausgebildet, oder wie hier dargestellt, mit Rollen 26 versehen sein. Zum Herausziehen des Untersatzes 24 ist ein Handgriff 25 vorgesehen. Der Kompost kann entweder direkt über die Öffnung 3 entnommen oder zuerst mittels des Siebelements 7 gefiltert werden. Um den Kompost zu filtern wird das Verschlussorgan 5 in seine Ruheposition geschoben und das Siebelement 7 vor die Öffnung 3 gezogen und in dieser Position fixiert. Wenn nun die Trommel 1 gedreht wird, tritt der Kompost über das Siebelement 7 aus der Trommel 1 aus und fällt in den Untersatz hinein. Das Drehen der Trommel 1 kann entweder manuell mittels der Kurbel 21 oder über den Elektromotor 22 erfolgen.

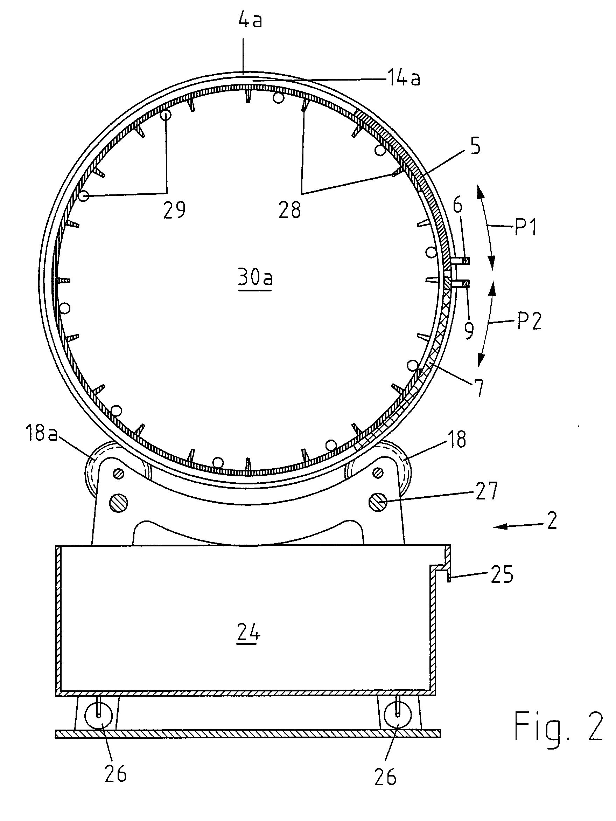

Fig. 2 zeigt einen Querschnitt durch die Trommel 1 und den Untersatz 2 entlang der Linie A-A in Fig. 1. Wie aus dieser Schnitt-Darstellung ersichtlich ist, ist die Trommel 1 auf der Innenseite mit Mischelementen 28 zum Durchmischen des Inhalts versehen. Diese in axialer Richtung verlaufenden Mischelemente 28 wirken gleichzeitig als Verstärkungsrippen, welche der Trommel 1 die nötige Steifigkeit und Stabilität verleihen. Die Mischelemente 28 können sowohl einstückig mit der Trommel 1 ausgebildet oder mit dieser verbunden sein. Die Stirnseite 30a der Trommel 1 ist zudem mit Belüftungsöffnungen 29 versehen, welche das Durchtreten der für einen beschleunigten Kompostierungsprozess ggf. notwendigen Luft bzw. des Sauerstoffs ermöglichen. Diese Belüftungsöffnungen 29 reichen in radialer Richtung bis an die eigentliche Trommelwandung heran, so dass in der Trommel 1 von den Abfällen freigesetzte Flüssigkeit, sowie ggf. auch Regenwasser, seitlich entweichen kann.

Durch das Vorsehen von ringförmigen Führungsschienen 4a der genannten Art ist es beispielsweise möglich, die Trommel 1 aus Plattenmaterial herzustellen. Dieses Plattenmaterial wird durch Biegen in die gewünschte Form gebracht, so dass danach die runden Führungsschienen 4a, 4b seitlich aufgeschoben werden können. Die beiden Stirnseiten 30a, 30b können danach in bekannter Weise am Trommelkörper angeklebt oder mechanisch fixiert werden. Der Trommelkörper kann aus einem relativ dünnwandigen Material gefertigt werden, da die Mischelemente 28 zusammen mit den Führungsschienen 4a, 4b der Trommel 1 die notwendige Steifigkeit und Festigkeit verleihen. Die Tatsache, dass die beiden Führungsschienen 4a, 4b seitlich der Öffnung 3, und damit von der jeweiligen Stirnseite 30a, 30b der Trommel etwas nach innen versetzt, angeordnet sind, ist für die Stabilität der Trommel von zusätzlichem Vorteil.

Aus der Schnitt-Darstellung gemäss Fig. 2 ist insbesondere auch ersichtlich, dass das Verschlussorgan 5 und das Siebelement 7 die gleiche Krümmung wie die Trommel 1 aufweisen und mit je einem Handgriff 6, 9 versehen sind. Ausserdem ist der Schlitz 14 in der Führungsschiene 4a ersichtlich, in welchem das Verschlussorgan 5 sowie das Siebelement 7 geführt sind. Die Verschieberichtung des Verschlussorgans 5 und des Siebelements 7 ist durch Pfeile P1, P2 angedeutet.

Die gezeigte Vorrichtung zum Kompostieren von Haus- und Gartenabfällen ist einfach aufgebaut und kann kostengünstig hergestellt werden, wobei sie trotzdem sehr leicht und stabil ist.

Durch Drehen der Trommel 1 wird ein homogenes Durchmischen der darin aufgenommenen Abfälle sowie eines ggf. zugegebenen Kompostierbeschleunigers ermöglicht, so dass es zu einem beschleunigten biologischen Abbau und Umwandlungsprozess der in der Trommel 1 aufgenommenen organischen Materialien kommt. Durch den vorgesehenen Untersatz 24 kann der Kompost einfach entnommen und abtransportiert werden. Das Vorsehen eines Verschlussorgans 5 und eines Siebelements 7, welche wechselweise vor der Öffnung 3 platziert werden können, erlaubt sowohl ein schnelles Verschliessen der Öffnung 3 wie auch ein gezieltes Sieben des Komposts beim Entfernen aus der Trommel 1.

Um die Vorrichtung autonom betreiben zu können, können Solarzellen vorgesehen werden, welche die zum Antrieb des Elektromotors notwendige Energie liefern. Ggf. kann auch noch eine Akkumulator zum Speichern der Energie vorgesehen werden.

## Patentansprüche

1. Vorrichtung zum Kompostieren von Haus- und Gartenabfällen, mit einer um ihre Längsmittenachse (32) drehbaren Trommel (1), welche mit einer Öffnung (3) zum Einfüllen der Abfälle und im Innern angeordneten Mischelementen (28) zum Durchmischen des Inhalts versehen ist, **dadurch gekennzeichnet, dass** die Trommel (1) aus Kunststoff gefertigt ist und die Mischelemente (28) gleichzeitig als Verstärkungsrippen ausgebildet sind.

2. Vorrichtung nach Anspruch 1, **dadurch gekennzeichnet, dass** auf beiden Seiten der Öffnung (3) Führungsschienen (4a, 4b) zur Führung eines verschiebbaren Verschlussorgans (5) und/oder eines verschiebbaren Siebelements (7) angeordnet sind.

3. Vorrichtung nach Anspruch 2, **dadurch gekennzeichnet, dass** die Führungsschienen (4a, 4b) auf der Aussenseite der Trommel (1) angeordnet sind und die Trommel (1) vollständig umfassen.

4. Vorrichtung nach einem der vorhergehenden Ansprüche, **dadurch gekennzeichnet, dass** ein Untergestell (8) vorgesehen ist, welches auf der Oberseite mit Rollen oder Zahnrädern (18, 19) zum umfangsseitigen Abstützen der Trommel (1) versehen ist.

5. Vorrichtung nach einem der Ansprüche 2 bis 4, **dadurch gekennzeichnet, dass** die Führungsschienen (4a, 4b) zum Abstützen der Trommel (1) auf dem Untergestell (2) ausgebildet sind.

6. Vorrichtung nach Anspruch 5, **dadurch gekennzeichnet, dass** die Führungsschienen (4a, 4b) mit einer Verzahnung (12a, 12b) versehen sind, und dass das Untergestell (2) mit zumindest zwei antreibbaren Zahnrädern (18, 19) versehen ist, welche in die Verzahnung (12a, 12b) der Führungsschienen (4a, 4b) einzugreifen bestimmt sind.

7. Vorrichtung nach Anspruch 5 oder 6, **dadurch gekennzeichnet, dass** die Führungsschienen (4a, 4b) mit einer seitlichen Führungsfläche (13a) zum seitlichen Führen der Trommel (1) auf dem Untergestell (2) versehen sind.

8. Vorrichtung nach einem der Ansprüche 2 bis 7, **dadurch gekennzeichnet, dass** die Trommel mit einem Verschlussorgan (5) und einem Siebelement (7) versehen ist, welche wechselweise zwischen einer Ruhe- und einer Wirkstellung verschiebbar sind, wobei sie in der Wirkstellung die Öffnung (3) zu verschliessen bzw. abzudecken bestimmt sind.

9. Vorrichtung nach Anspruch 8, **dadurch gekennzeichnet, dass** Mittel zum Fixieren des Verschlussorgans (5) und des Siebelements (7) in der Wirk- und in der Ruhestellung vorgesehen sind.

10. Vorrichtung nach Anspruch 6, **dadurch gekennzeichnet, dass** am Untergestell (2) eine Kurbel (21) oder ein Elektromotor (22) zum Antreiben der Zahnräder (18, 19) angeordnet ist.

11. Vorrichtung nach einem der vorhergehenden Ansprüche, **dadurch gekennzeichnet, dass** die Mischelemente (28) einen integralen Bestandteil der Trommel (1) bilden und einstückig mit letzterer ausgebildet sind.

12. Vorrichtung nach einem der vorhergehenden Ansprüche, **dadurch gekennzeichnet, dass** ein Untersatz (24) zum Aufnehmen von Kompost vorgesehen ist.

13. Vorrichtung nach Anspruch 12, **dadurch gekennzeichnet, dass** der Untersatz (24) als Schublade ausgebildet und/oder mit Rollen (26) versehen ist.

14. Vorrichtung nach einem der vorhergehenden Ansprüche, **dadurch gekennzeichnet, dass** zumindest die eine Stirnseite (30a, 30b) der Trommel (1) mit Belüftungsöffnungen (29) versehen ist.

15. Vorrichtung nach Anspruch 14, **dadurch gekennzeichnet, dass** die Belüftungsöffnungen (29) in radialer Richtung zumindest annähernd bis an die Trommelwandung heranreichen.
